# EUROPEAN PATENT SPECIFICATION

(11) **EP 2 497 846 B1**
(45) Date of publication and mention of the grant of the patent: **22.07.2015**
(21) Application number: 11181461.2
(22) Date of filing: 15.09.2011
(51) Int. Cl.: C25F 3/04

(54) **Aluminum alloy-and-resin composite and method for making the same**
Aluminiumlegierungs-Harz-Verbundwerkstoff und Herstellungsverfahren dafür
Composite en alliage d'aluminium et résine et procédé de fabrication associé

(30) Priority: 11.03.2011 CN 201110058897
(43) Date of publication of application: 12.09.2012
(73) Proprietor: Hon Hai Precision Industry Co., Ltd., New Taipei City (TW); Hong Fu Jin Precision Industry (ShenZhen) Co., Ltd., Longhua Town, Bao'an District Shenzhen City Guangdong 518109 (CN)
(72) Inventor: Chang, Hsin-Pei, Tu-Cheng New Taipei (TW); Chen, Wen-Rong, Tu-Cheng New Taipei (TW); Chiang, Huann-Wu, Tu-Cheng New Taipei (TW); Chen, Cheng-Shi, Tu-Cheng New Taipei (TW); Wu, Po-Chuan, Tu-Cheng New Taipei (TW); Sun, Dai-Yu, Shenzhen City (CN); Feng, Yuan-Yuan, Shenzhen City Guangdong (CN)
(74) Representative: Wilson, Peter

(56) References cited:
- EP-A1- 1 559 542
- CN-A- 101 941 271

## Description

### FIELD

The present disclosure relates to aluminum alloy-and-resin composites, particularly to an aluminum alloy-and-resin composite having high bonding strength between aluminum alloy and resin and a method for making the composite.

### BACKGROUND

Adhesives, for combining heterogeneous materials in the form of a metal (such as light metals) and a synthetic resin are demanded in a wide variety of technical fields and industries, such as the automotive and household appliance fields. However, adhesives are generally only effective in a narrow temperature range of about -50 °C to about 100 °C, which means they are not suitable in applications where operating or environmental temperatures may fall outside the range.

Therefore, other bonding methods have been applied that do not involve the use of an adhesive. One example of such methods is by forming bonds through injection molding or other similar process. However, the bonding strength of the metal and resin can be further improved.

EP Patent Application Publication No. 1559542A1 discloses a composite of aluminum alloy and resin composition and process for producing the composite. The composite includes a shaped aluminum alloy material having a surface with a surface roughness of 5µm to 50µm and having fine recesses or projections of not larger than 1µm on said surface, and a thermoplastic resin composition fixed to the surface of said shaped aluminum alloy material by entering said recesses or engaging said projections. The thermoplastic resin composition contains as a main component a polybuty-lene terephthalate resin or polyphenylene sulfide having an average coefficient of lengthwise and crosswise linear expansion of 2 to 4×10⁻⁵°C⁻¹.

CN Patent Application Publication No. 101941271A (also the corresponding EP family Application 2400042A) discloses a metal-and-resin composite. The metal-and-resin composite includes a metal substrate having a surface with nano-pores having an average diameter of about 30-55 nm, and a resin composition integrally bonded to the surface of the metal substrate having the nano-pores and filling the nano-pores. The resin composition containing crystalline thermoplastic synthetic resins. A method for making the metal-and-resin composite includes the following steps: providing a metal substrate; chemically cleaning a surface of the metal substrate to form nano-pores having an average diameter of about 30-55 nm; positioning the metal substrate in a mold and heating the metal substrate to about 100°C-350°C; molding crystalline thermoplastic synthetic resin on the chemically cleaned surface of the metal substrate and filling the nano-pores; and instantaneously cooling the mold to form the composite.

Therefore, there is room for improvement within the art.

### SUMMARY

According to one aspect of the disclosure, an aluminum alloy-and-resin composite is provided. The aluminum alloy-and-resin composite includes an aluminum alloy substrate electrochemically etched to form nano-pores on a surface thereof, and at least a resin composition integrally coupled to the surface of the aluminum alloy substrate having the nano-pores. The resin composition fills the nano-pores and contains crystalline thermoplastic synthetic resins.

According to another aspect of the disclosure, a method for making an aluminum alloy-and-resin composite is provided. The method includes providing an aluminum alloy substrate; electrochemical etching the substrate to form nano-pores on a surface thereof; and inserting the substrate in a mold and molding crystalline thermoplastic synthetic resin on the surface having the nano-pores and filling the nano-pores to form the composite.

### BRIEF DESCRIPTION OF THE DRAWINGS

Many aspects of the aluminum alloy-and-resin composite can be better understood with reference to the following figures. The components in the figures are not necessarily drawn to scale, the emphasis instead being placed upon clearly illustrating the principles of the aluminum alloy-and-resin composite. Moreover, in the drawings like reference numerals designate corresponding parts throughout the several views.

Fig. 1 is a cross-section view of an exemplary embodiment of a composite of electrochemically etched aluminum alloy and resin.

Fig. 2 is a scanning electron microscopy view of an exemplary embodiment of the electrochemically etched aluminum alloy.

Fig. 3 is a cross-section view of molding the composite shown in Fig. 1.

### DETAILED DESCRIPTION

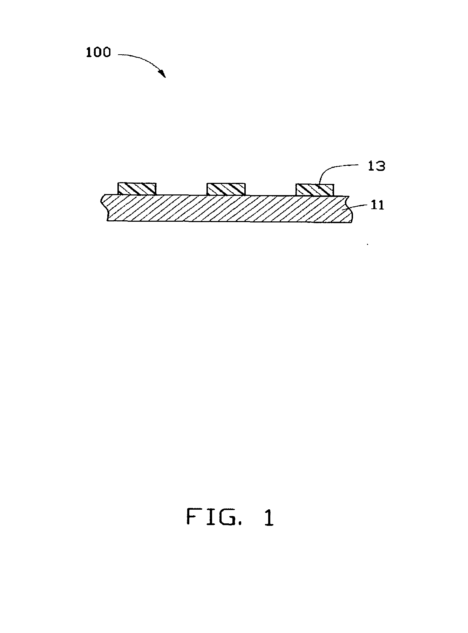

Fig. 1 shows an aluminum alloy-and-resin composite 100 according to an exemplary embodiment. The aluminum alloy-and-resin composite 100 includes an aluminum alloy substrate 11 and resin compositions 13 formed on the substrate 11.

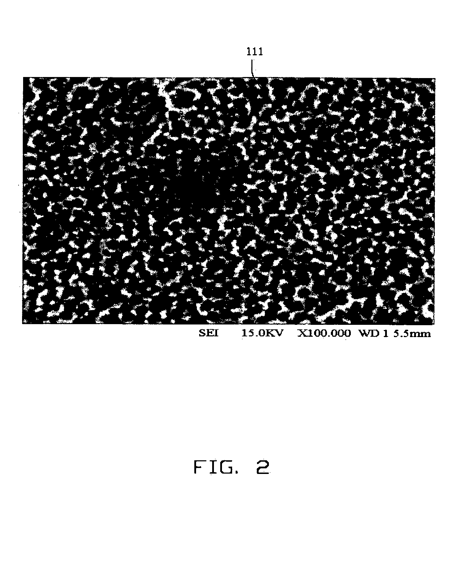

Referring to Fig. 2, the substrate 11 defines nano-pores 111. These nano-pores 111 have an average diameter of 20-60 nm. The nano-pores 111 may be evenly distributed on the substrate 11. The surface roughness (Ra) of the substrate 11 is about 0.1-1 µm. The nano-pores 111 may be formed by electrochemically etching the substrate 11. An energy dispersive spectrometer (EDS) test indicates that no alumina or other oxide film forms on the surface of the substrate 11 after the substrate 11 is electrochemically etched.

The resin compositions 13 may be coupled to the surface of the substrate 11 having the nano-pores 111 by molding. During the molding process, molten resin coats the surface of the substrate 11 and fills the nano-pores 111, thus strongly bonding the resin compositions 13 to the substrate 11. Compared to the conventional injection molding process in which the aluminum alloy substrate is not electrochemically etched, the composite 100 in this exemplary embodiment has a much stronger bond between the resin compositions 13 and the substrate 11 (about quintuple the bonding force). The resin compositions 13 may be made up of crystalline thermoplastic synthetic resins having high fluidity. In this exemplary embodiment, polyphenylene sulfide (PPS) and polyamide (PA) can be selected as the molding materials for the resin compositions 13. These resin compositions 13 can bond firmly with the substrate 11.

It is to be understood that auxiliary components may be added to the resins to modify properties of the resin compositions 13, for example, fiberglass may be added to PPS. The fiberglass may have a mass percentage of about 30%.
A method for making the composite 100 may include the following steps:

The aluminum alloy substrate 11 is provided.

The substrate 11 is degreased. The degreasing process may include the step of dipping the substrate 11 in a sodium salt water solution for about 5-15 minutes. The sodium salt solution may include sodium carbonate having a concentration of about 30-50 grams per liter (g/L), sodium phosphate having a concentration of about 30-50 g/L, and sodium silicate having a concentration of about 3-5 g/L. The temperature of the sodium salt solution may be about 50-60°C. Once degreased, the substrate 11 is removed from the sodium salt solution and rinsed in water.

The surface of the substrate 11 is smoothened. The smoothening of the substrate 11 may include the step of alkaline eroding. The alkaline eroding process may include the step of dipping the substrate 11 in an alkaline water solution for about 3-5 minutes. The alkaline solution may include sodium hydroxide having a concentration of about 10-50 g/L. The alkaline eroding process smoothes the surface of the substrate 11 so that the smoothed surface of the substrate 11 will be more uniformly electrochemically etched to obtain a narrower range of diameters of the nano-pores 111 of the substrate 11. Next, the substrate 11 is removed from the alkaline solution and rinsed in water.

The substrate 11 is electrochemically etched to form the nano-pores 111.
The electrochemical etching process may be carried out in an acid water solution containing sulfuric acid and phosphoric acid, with the substrate 11 being an anode, and a stainless steel board or a lead plate being a cathode. The sulfuric acid may have a concentration of about 30-50 ml/L, and the phosphoric acid may have a concentration of about 20-60 ml/L. The electric current density through the acid solution is about 2-4 ampere per square decimeter (A/dm²). Electrochemical etching the substrate 11 may last for about 8-15 minutes, which is considerably less time and more effective than an anodizing process (about 20-60 minutes) for forming nano-pores. Next, the substrate 11 is rinsed in water and then dried.

During the electrochemical etching process, Al on the surface of the substrate 11 loses electrons to form aluminum ions in the acid solution (Al-3e=Al³⁺), as such, the substrate 11 is etched and nano-pores 111 are formed.

In the exemplary embodiment, the electrochemical etching process is substantially different from the anodizing process for aluminum alloy, which is substantially the process of forming alumina having nano-pores on the aluminum alloy.

Furthermore, compared to conventional chemical etching process, the electrochemical etching process in the exemplary embodiment is effective in forming nano-pores in the substrate 11, and the nano-pores 111 are of a more uniform shape, with a narrow range of diameters, and are evenly distributed in the substrate 11.

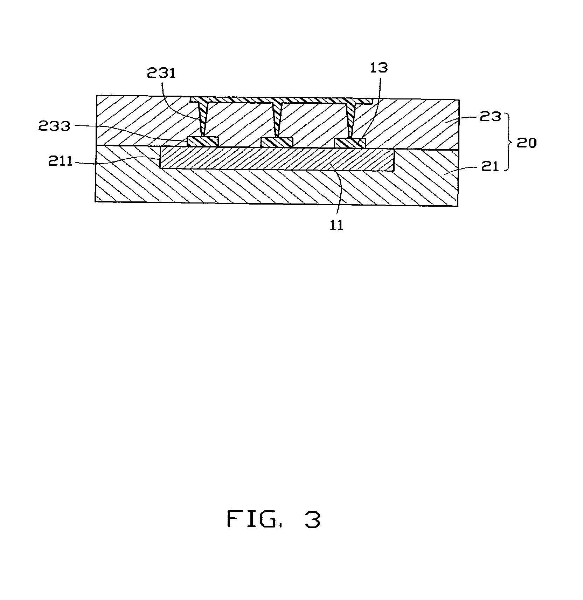

Referring to Fig. 3, an injection mold 20 is provided. The injection mold 20 includes a core insert 23 and a cavity insert 21. The core insert 23 defines several gates 231, and several first cavities 233. The cavity insert 21 defines a second cavity 211 for receiving the substrate 11. The electrochemically etched substrate 11 is located in the second cavity 211, and molten resin is injected through the gates 231 to coat the surface of the substrate 11 and fill the nano-pores 111, and finally fill the first cavities 233 to form the resin compositions 13, as such, the composite 100 is formed. The molten resin may be crystalline thermoplastic synthetic resins having high fluidity, such as PPS, or PA. During the molding process, the injection mold 20 may be at a temperature of about 120-140°C.

Tensile strength and shear strength of the composite 100 have been tested. The tests indicate that the tensile strength of the composite 100 is greater than 10 MPa, and the shear strength of the composite 100 is greater than 20 MPa. Furthermore, the composite 100 has been subjected to a temperature humidity bias test (72 hours, 85°C, relative humidity: 85%) and a thermal shock test (48 hours, -40 ~ 85°C, 4 hours/cycle, 12 cycles total), such testing did not result in decreased tensile strength and shear strength of the composite 100.

It is believed that the exemplary embodiment and its advantages will be understood from the foregoing description, and it will be apparent that various changes may be made thereto without departing from the scope of the claims, the examples hereinbefore described merely being preferred or exemplary embodiment of the disclosure.

## Claims

1. An aluminum alloy-and-resin composite (100), comprising:
an aluminum alloy substrate having nano-pores (111) formed on a surface thereof; and
at least a resin composition (13) integrally coupled to the surface of the aluminum alloy substrate (11) having the nano-pores (111), the resin composition (13) filling the nano-pores (111) and containing crystalline thermoplastic synthetic resins; **characterized in that**
the aluminum alloy substrate (11) is electrochemically etched to form the nano-pores (111) in the aluminum alloy substrate (11).

2. The composite as claimed in claim 1, wherein the nano-pores (111) have an average diameter of about 20-60 nm.

3. The composite as claimed in claim 2, wherein the surface of the substrate (11) has a surface roughness (Ra) of about 0.1-1 µm.

4. The composite as claimed in claim 1, wherein the surface of the substrate (11) is formed with no alumina or oxide film on its surface.

5. The composite as claimed in claim 1, wherein the crystalline thermoplastic synthetic resin is polyphenylene sulfide or polyamide.

6. The composite as claimed in claim 5, wherein the crystalline thermoplastic synthetic resin is polyphenylene sulfide added with fiberglass, the fiberglass has a mass percentage of about 30%.

7. A method for making an aluminum alloy-and-resin composite (100), comprising:
providing an aluminum alloy substrate (11);
electrochemical etching the substrate (11) to form nano-pores (111) in a surface thereof; and
inserting the substrate (11) in a mold (20) and molding crystalline thermoplastic synthetic resin on the surface having the nano-pores (111) and filling the nano-pores (111) to form the composite (100).

8. The method as claimed in claim 7, wherein electrochemical etching the substrate (11) is carried out in an acid water solution containing sulfuric acid and phosphoric acid for about 8-15 minutes, the concentration of the sulfuric acid is about 30-50 ml/L, the concentration of the phosphoric acid is about 20-60 ml/L, the electric current density through the acid solution is about 2-4 A/dm².

9. The method as claimed in claim 8, wherein the substrate (11) is used as an anode during the electrochemically etching process, and Al on the surface of the substrate loses electrons to form aluminum ions in the acid water solution.

10. The method as claimed in claim 7, further comprising a step of smoothening the surface of the substrate (11) before electrochemical etching the substrate (11).

11. The method as claimed in claim 10, wherein smoothening the substrate (11) comprising a step of alkaline eroding the substrate (11).

12. The method as claimed in claim 11, wherein alkaline eroding the substrate (11) comprising the step of dipping the substrate (11) in a sodium hydroxide water solution having a concentration of about 10-50 g/L for about 3-5 minutes.

13. The method as claimed in claim 10, further comprising a step of degreasing the substrate (11) before smoothening the substrate (11).

## Patentansprüche

1. Ein Aluminiumlegierungs-Harz-Verbundwerkstoff (100), beinhaltend:
ein Aluminiumlegierungssubstrat mit Nanoporen (111), gebildet auf einer Oberfläche davon; und
mindestens eine Harzzusammensetzung (13), integral gekoppelt an die Oberfläche des Aluminiumlegierungssubstrats (11) mit den Nanoporen (111), wobei die Harzzusammensetzung (13) die Nanoporen (111) füllt und kristalline thermoplastische Kunstharze enthält; **dadurch gekennzeichnet, dass**
das Aluminiumlegierungssubstrat (11) elektrochemisch geätzt wird, um die Nanoporen (111) in dem Aluminiumlegierungssubstrat (11) zu bilden.

2. Verbundwerkstoff gemäß Anspruch 1, wobei die Nanoporen (111) einen durchschnittlichen Durchmesser von etwa 20-60 nm aufweisen.

3. Verbundwerkstoff gemäß Anspruch 2, wobei die Oberfläche des Substrats (11) eine Oberflächenrauigkeit (Ra) von etwa 0,1-1 µm aufweist.

4. Verbundwerkstoff gemäß Anspruch 1, wobei die Oberfläche des Substrats (11) mit keiner Aluminiumoxid- oder Oxidschicht auf ihrer Oberfläche gebildet ist.

5. Verbundwerkstoff gemäß Anspruch 1, wobei das kristalline thermoplastische Kunstharz Polyphenylensulfid oder Polyamid ist.

6. Verbundwerkstoff gemäß Anspruch 5, wobei das kristalline thermoplastische Kunstharz Polyphenylensulfid ist, zu dem Glasfaser hinzugegeben wird, wobei die Glasfaser einen Massenanteil von etwa 30 % aufweist.

7. Ein Verfahren zur Herstellung eines Aluminiumlegierungs-Harz-Verbundwerkstoffs (100), beinhaltend:
Bereitstellen eines Aluminiumlegierungssubstrats (11);
elektrochemisches Ätzen des Substrats (11), um in einer Oberfläche desselben Nanoporen (111) zu bilden; und
Einsetzen des Substrats (11) in eine Form (20) und Formen kristallinen thermoplastischen Kunstharzes auf der Oberfläche mit den Nanoporen (111) und Füllen der Nanoporen (111), um den Verbundwerkstoff (100) zu bilden.

8. Verfahren gemäß Anspruch 7, wobei das elektrochemische Ätzen des Substrats (11) ca. 8-15 Minuten lang in einer sauren, Schwefelsäure und Phosphorsäure enthaltenden Wasserlösung durchgeführt wird, wobei die Konzentration der Schwefelsäure ca. 30-50 ml/1 beträgt, die Konzentration der Phosphorsäure ca. 20-60 ml/l beträgt, die elektrische Stromdichte durch die saure Lösung ca. 2-4 A/dm² beträgt.

9. Verfahren gemäß Anspruch 8, wobei das Substrat (11) während des elektrochemischen Ätzprozesses als eine Anode verwendet wird und Al auf der Oberfläche des Substrats an Elektronen verliert, um Aluminiumionen in der sauren Wasserlösung zu bilden.

10. Verfahren gemäß Anspruch 7, ferner beinhaltend einen Schritt des Glättens der Oberfläche des Substrats (11) vor dem elektrochemischen Ätzen des Substrats (11).

11. Verfahren gemäß Anspruch 10, wobei das Glätten des Substrats (11) einen Schritt des alkalischen Abtragens des Substrats (11) beinhaltet.

12. Verfahren gemäß Anspruch 11, wobei das alkalische Abtragen des Substrats (11) den Schritt des Eintauchens des Substrats (11) für ca. 3-5 Minuten in eine Natriumhydroxid-Wasser-Lösung mit einer Konzentration von ca. 10-50 g/l beinhaltet.

13. Verfahren gemäß Anspruch 10, ferner beinhaltend einen Schritt des Entfettens des Substrats (11) vor dem Glätten des Substrats (11).

## Revendications

1. Un composite en alliage d'aluminium et résine (100) comprenant :
un substrat en alliage d'aluminium ayant des nanopores (111) formés sur une surface de celui-ci ; et
au moins une composition de résine (13) couplée de façon solidaire à la surface du substrat en alliage d'aluminium (11) ayant les nanopores (111), la composition de résine (13) remplissant les nanopores (111) et contenant des résines synthétiques thermoplastiques cristallines ; **caractérisé en ce que**
le substrat en alliage d'aluminium (11) est gravé de façon électrochimique pour former les nanopores (111) dans le substrat en alliage d'aluminium (11).

2. Le composite tel que revendiqué dans la revendication 1, dans lequel les nanopores (111) ont un diamètre moyen d'environ 20 à 60 nm.

3. Le composite tel que revendiqué dans la revendication 2, dans lequel la surface du substrat (11) a une rugosité de surface (Ra) d'environ 0,1 à 1 µm.

4. Le composite tel que revendiqué dans la revendication 1, dans lequel la surface du substrat (11) est formée sans film d'alumine ou d'oxyde sur sa surface.

5. Le composite tel que revendiqué dans la revendication 1, dans lequel la résine synthétique thermoplastique cristalline est du sulfure de polyphénylène ou du polyamide.

6. Le composite tel que revendiqué dans la revendication 5, dans lequel la résine synthétique thermoplastique cristalline est du sulfure de polyphénylène auquel de la fibre de verre a été ajoutée, la fibre de verre ayant un pourcentage de masse d'environ 30%.

7. Une méthode pour réaliser un composite en alliage d'aluminium et résine (100), comprenant le fait :
de fournir un substrat en alliage d'aluminium (11) ;
de graver de façon électrochimique le substrat (11) pour former des nanopores (111) dans une surface de celui-ci ; et
d'insérer le substrat (11) dans un moule (20) et de mouler la résine synthétique thermoplastique cristalline sur la surface ayant les nanopores (111) et de remplir les nanopores (111) pour former le composite (100).

8. La méthode telle que revendiquée dans la revendication 7, dans laquelle la gravure électrochimique du substrat (11) est effectuée dans une solution aqueuse d'acides contenant de l'acide sulfurique et de l'acide phosphorique pendant environ 8 à 15 minutes, la concentration de l'acide sulfurique est d'environ 30 à 50 ml/L, la concentration de l'acide phosphorique est d'environ 20 à 60 ml/L, la densité de courant électrique traversant la solution d'acides est d'environ 2 à 4 A/dm².

9. La méthode telle que revendiquée dans la revendication 8, dans laquelle le substrat (11) est utilisé comme anode au cours du procédé de gravure électrochimique, et Al sur la surface du substrat perd des électrons pour former des ions aluminium dans la solution aqueuse d'acides.

10. La méthode telle que revendiquée dans la revendication 7, comprenant en sus une étape de lissage de la surface du substrat (11) avant la gravure électrochimique du substrat (11).

11. La méthode telle que revendiquée dans la revendication 10, dans laquelle le lissage du substrat (11) comprend une étape d'érosion alcaline du substrat (11).

12. La méthode telle que revendiquée dans la revendication 11, l'érosion alcaline du substrat (11) comprenant l'étape de trempage du substrat (11) dans une solution aqueuse d'hydroxyde de sodium ayant une concentration d'environ 10 à 50 g/L pendant environ 3 à 5 minutes.

13. La méthode telle que revendiquée dans la revendication 10, comprenant en sus une étape de dégraissage du substrat (11) avant le lissage du substrat (11).
